# EUROPÄISCHE PATENTANMELDUNG

(11) **EP 0 594 889 A1**
(43) Veröffentlichungstag der Anmeldung: **04.05.1994**
(21) Anmeldenummer: 92118571.6
(22) Anmeldetag: 30.10.1992
(51) Int. Cl.: B29C 65/12

(54) **Schweissgerät**

(71) Anmelder: Munsch Chemie-Pumpen GmbH, D-56235 Ransbach-Baumbach (DE)
(72) Erfinder: Munsch, Erich, W-5432 Wirges (DE)

(57) **Zusammenfassung**

Schweißgeräte zur Verarbeitung von thermoplastischem Kunststoffmaterial mit einer beheizbaren Förderkammer (2), einem Antrieb (11) für ein Förderelement (3) und einem Lufterhitzer (20) für die Vorwärmluft, wobei der Antrieb (11) zusätzlich mit einem axial in Reihe liegenden Gebläse (13) zur Speisung des Lufterhitzers (20) gekoppelt ist.

## Beschreibung

Die Erfindung bezieht sich auf ein Schweißgerät gemäß dem Oberbegriff des Anspruchs 1.

Derartige Schweißgeräte sind aus der DE-OS 28 23 171 und in einer Weiterentwicklung aus der DE-PS 38 08 723 bekannt.

Diese Schweißgeräte werden für die unterschiedlichsten Schweißaufgaben verwendet und werden sowohl zum Verschweißen reinen Plattenmaterials als auch von Rohren verwendet. Obwohl diese Geräte schon sehr stark vereinfacht wurden und insbesondere bei Verwendung von Schweißdraht universell einsetzbar sind, ist die Zufuhr der Luft zum Lufterhitzer für die Vorwärmluft beim Schweißen über einen Schlauch von einem Kompressor recht hinderlich.

Aufgabe der Erfindung ist es, diesen Magel zu beseitigen.

Dies wird mit dem kennzeichnenden Merkmal des Anspruchs 1 gelöst. Dadurch daß das Schweißgerät mit seinem Antrieb zusätzlich ein Leistungsfähiges Gebläse antreibt, kann das Schweißgerät seine Vorwärmluft selbst erzeugen uns ist somit frei von der Verbindung zu einem Kompressor. Dabei war die häufig notwendige Lange Verbindungsleitung besonders hinderlich und führte zu hohen Druckabfällen, dadurch war es erforderlich, einen entsprechend starken Kompressor zu verwenden. Dadurch, daß das Gebläse nun unmittelbar am Schweißgerät angeflanscht ist, sind nur sehr kurze Luftwege mit optimaler Luftführung notwendig, wodurch ein weitaus geringerer Leistungsbedarf besteht. Das relativ geringe Mehrgewicht des Schweißgerätes wird bei weitem dadurch aufgweogen, daß kein Luftzuführungsschlauch mehr mitgezogen werden muß. Zudem wird die Führung des Schweißgerätes beim Arbeiten derartig stark verbessert, daß ein deutlich sichtbarer Qualitätsgewinn bei den Schweißnähten erzielt wird.

Weitere Ausgestalungen der Erfindung sind den Unteransprüchen zu entnehmen. So wird durch die axiale Anflanschung des Gebläses eine besonders schlanke Bauform des Schweißgerätes erreicht.

Die Ausbildung des Gebläses als Radialgebläse und insbesondere die Verwendung von Rotationsbremsstegen bringt einen hohen Wirkungsgrad. Weiter kann über dieses Gebläse zusätzlich die Kühlung des Antriebs verbessert werden. Da für derartige Schweißgeräte häufig serienmäßige Bohrmaschinen als Antrieb verwendet werden, ist die in diesen Maschinen eingebaute Kühlung bei Dauerbetrieb als Schweißgerät nicht ausreichend. Die Versorgung mit zusätzlicher Kühlluft bringt eine höhere Zuverlässigkeit des Schweißgerätes. Desweiteren kann Luft aus diesem Gebläse zur Kühlung der Lagerung des Förderelementes beziehungsweise des Einlaßbereiches des Schweißmaterials, insbesondere bei Verwendung von Schweißdraht verwendet werden. Eine weitere Maßnahme zur Verkleinerung des Gerätes liegt darin, daß die Gebläseluft zunächst zur Antriebs- und Lagerkühlung verwendet wird, um dann vorgewärmt in den Lufterhitzer geführt zu werden. Dadurch wird eine zusätzliche Steigerung des Wirkungsgrades erreicht.

Einige Ausführungsbeispiele der Erfindung werden im foglenden an Hand der Zeichung näher erläutert.

Es zeigen:
- Figur 1: eine Gesamtansicht eines Schweißgerätes teilweise geschnitten.
- Figur 2: eine erste Alternativlösung,
- Figur 3: eine weitere Alternativlösung in gleicher Ansicht und
- Figur 4: eine dritte Alternativlösung.

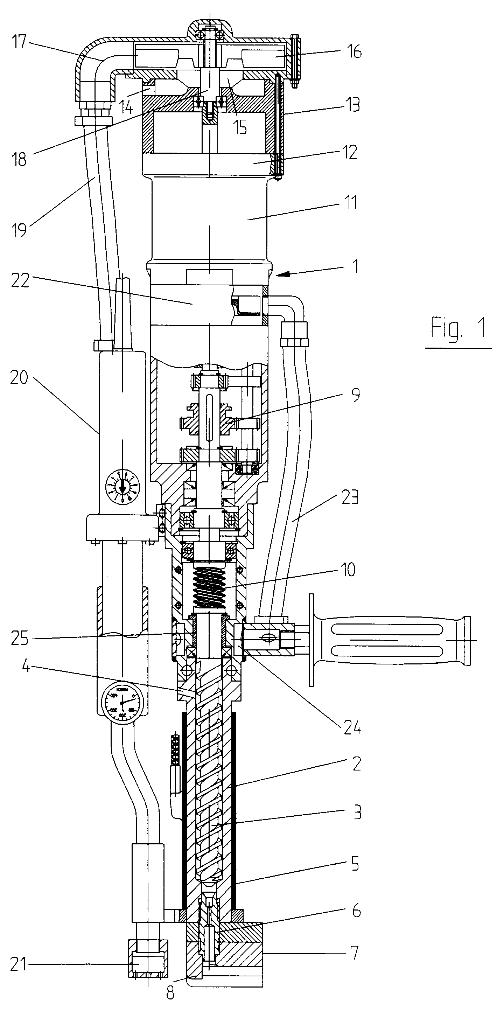

Nach Figur 1 besitzt ein Schweißgerät 1 eine längliche Förderkammer 2 in der ein Förderelement 3 angeordnet ist. Das Förderelement 3 ist als Schnecke ausgebildet und am Anfang mit einem nicht näher dargestellten Zerkleinerungsorgan versehen.

An ihrem Anfang weist die Förderkammer 2 eine Einlaßöffnung 4 für einen Schweißdraht auf. Natürlich kann anstelle des Schweißdrahtes insbesondere bei stationär eingesetzten Geräten ein Trichter zur Zufuhr von Granulatmaterial aufgesetzt sein.

Die Förderkammer 2 ist von einer Bandheizung 5 umgeben. Am Auslaß 6 der Förderkammer 2 ist ein Schweißschuh 7 mit einer Stauplatte 8 vorgesehen.

Das Förderelement 3 wird über ein Mehrganggetriebe 9 mit Leerlauf und einer Zwischenwelle 10 von einem Antrieb 11, in aller Regel eine abgeänderte Bohrmaschine, angetrieben.

Am entgegengesetzten Ende 12 des Förderelementes 3 ist gemäß Figur 1 axial ein Gebläse 13 angeflanscht.

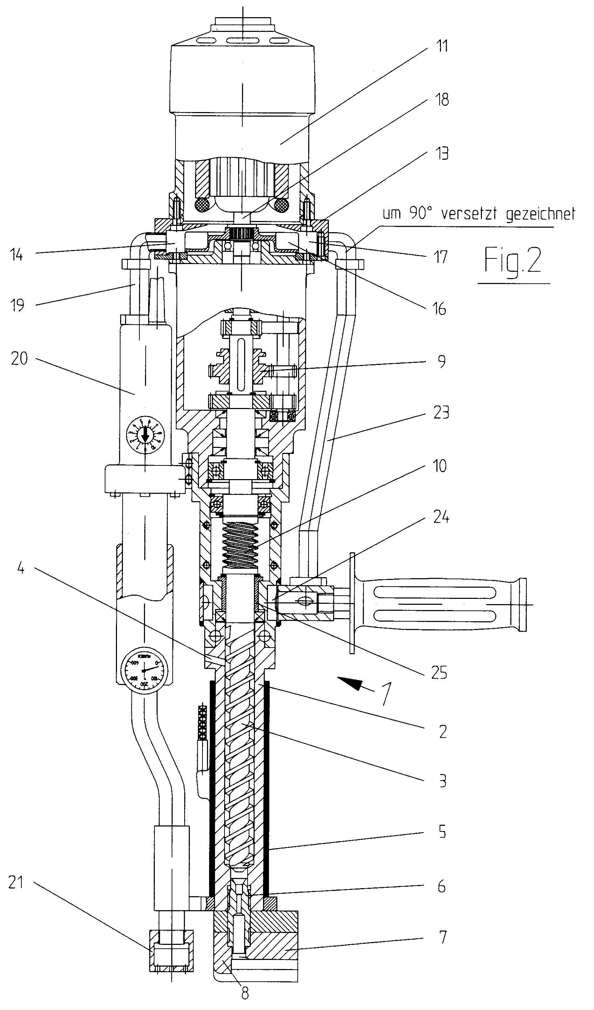

Nach Figur 2 ist das Gebläse 13 in einem axial durchgängigen Strang zwischen dem Mehrganggetriebe 9 und dem Antrieb 11 angeordnet.

Das Gebläse 13 besteht aus einem ringförmigen Lufteinlaufkanal 14, in dem Rotationsbremsstege 15, nur Figur 1, angeordnet sind, einem Radiallaufrad 16 und einem Auslaufkanal 17. Angetrieben wird das Radiallaufrad direkt von der Ankerwelle 18 des Antriebs 11.

Der Auslaufkanal 17 steht über einer kurze Luftleitung 19 direkt mit einem Lufterhitzer 20 in Verbindung. Der Lufterhitzer 20 endet vor dem Schweißschuh 7 in einer Luftdüse 21 und dient der Vorwärmung der zu verschweißenden Platten.

Der Antrieb 11, im vorliegenden Fall ein Elektromotor, wird ebenfalls vom Gebläse 13 gekühlt.

Weiter zweigt eine Kühlluftzuführung 23 zu einem Kühlmantel 24 ab, die die Lagerung 25 des Förderelementes 3 sowie den Bereich der Einlaßöffnung 4 kühlen. Die Einlaßöffnung 4 wird deshalt sinnvollerweise gekühlt, um zu verhindern, daß beim Leerlauf des Schweißgerätes der Schweißdraht in der Einlaßöffnung 4 schmilzt und dadurch abreißt. Der Kühlmantel 24 hat freie Öffnungen nach außen.

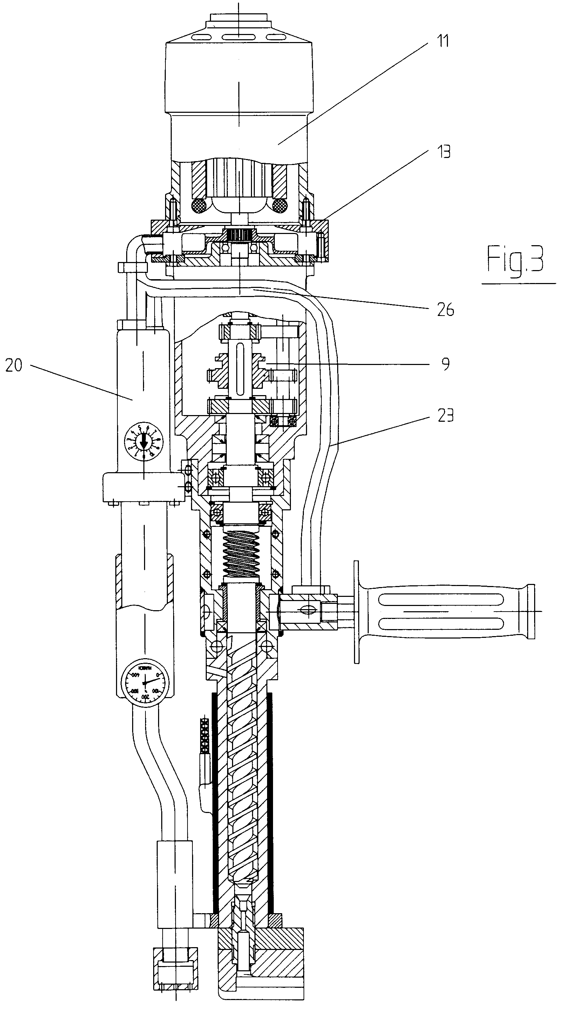

Das Ausführungsbeispiel gemäß der Figur 3 entspricht im wesentlichen dem Schweißgerät nach Figur 2 im Grundaufbau. Abweichend davon ist von der Luftleitung 19 eine Zweigleitung 26 mit der Kühlluftzuführung 23 verbunden. Die restlichen Ausführungsdetails sind identisch dem Gerät nach Figur 2.

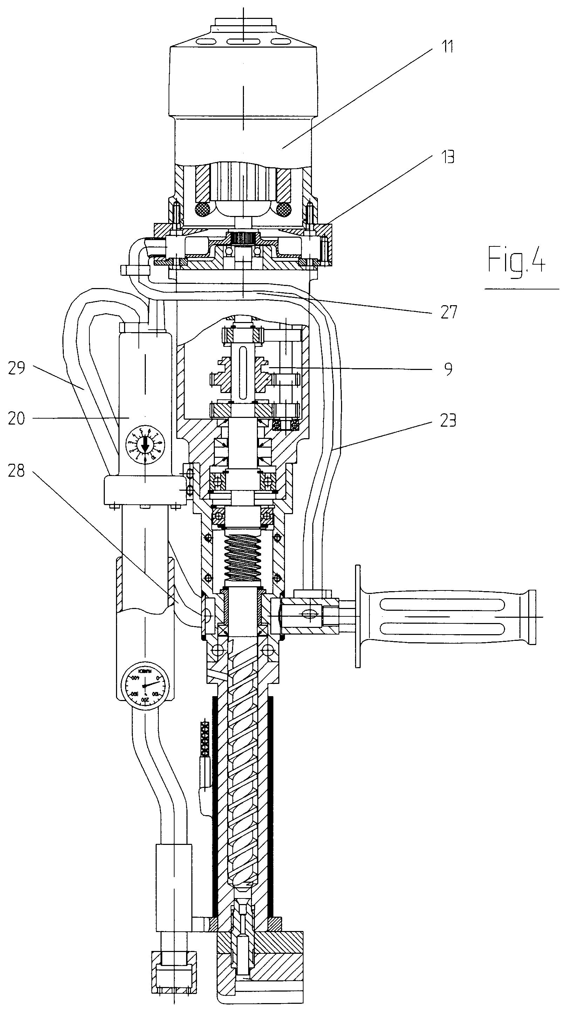

Bei dem Ausführungsbeispiel gemäß der Figur 4 ist der Auslaufkanal 17 des Gebläses 13 über eine Zwischenleitung 27 mit der Kühlluftzuführung 23 verbunden. Der Kühlmantelauslaß 28 wiederum ist über eine weitere Leitung 29 mit dem Lufterhitzer 20 verbunden. Dadurch erhält der Lufterhitzer 20 bereits vorgewärmte Luft, wodurch der Wirkungsgrad des Schweißgerätes weiter erhöht wird.

## Patentansprüche

1. Schweißgeräte zur Verarbeitung von thermoplastischem Kunststoffmaterial mit einer beheizbaren Förderkammer (2), einem Antrieb (11) für ein Förderelement (3) und einem Lufterhitzer (20) für die Vorwärmluft, dadurch gekennzeichnet, daß der Antrieb (11) zusätzlich mit einem Gebläse (13) zur Speisung der Lufterhitzers (20) gekoppelt ist.

2. Schweißgerät nach Anspruch 1, dadurch gekennzeichnet, daß das Gebläse (13) axial an das dem Förderelement (3) entgegengesetzte Ende (12) angeflanscht und von einer Verlängerung der Antrieb-Welle (18) angetrieben ist.

3. Schweißgerät nach Anspruch 1, dadurch gekennzeichnet, daß das Gebläse (13) axial zwischen einem Mehrganggetriebe (9) und dem Antrieb (11) angeordnet ist.

4. Schweißgerät nach Anspruch 1 oder 2, dadurch gekennzeichnet, daß das Gebläse (13) als Radialgebläse ausgebildet ist.

5. Schweißgerät nach einem der Ansprüche 1 bis 4, dadurch gekennzeichnet, daß im Gehäuse des Gebläses (13) Ausgangsöffnung für die Kühlluft des Antriebs (11) vorgesehen sind.

6. Schweißgerät nach einem der Ansprüche 1 bis 5, dadurch gekennzeichnet, daß der Auslaufkanal (17) des Gebläses (13) über eine Luftleitung (19) direkt mit dem Lufterhitzer (20) verbunden ist.

7. Schweißgeräte nach einem der Ansprüche 1 bis 5, dadurch gekennzeichnet, daß der Auslaufkanal (17) des Gebläses (13) über eine Zwischenleitung (27) mit einer Kühlluftzuführung (23) zu einem Kühlmantel (24) und deren Auslaß (28) über eine weitere Leitung (29) mit dem Lufterhitzer (20) verbunden ist.

8. Schweißgeräte nach einem der Ansprüche 1 bis 6, dadurch gekennzeichnet, daß die Luftleitung (19) über eine Zweigleitung (26) mit der Kühlluftzuführung (23) verbunden ist.
